# EUROPEAN PATENT APPLICATION

(11) **EP 4 489 044 A1**
(43) Date of publication of application: **08.01.2025**
(21) Application number: 23183717.0
(22) Date of filing: 05.07.2023
(51) Int. Cl.: H01G 9/20

(54) **PHOTOVOLTAIC DEVICES COMPRISING ADHERING LAYERS**

(71) Applicant: Exeger Operations AB, 102 04 Stockholm (SE)
(72) Inventor: LINDSTRÖM, Henrik, 182 35 Danderyd (SE); FILI, Giovanni, 182 56 Danderyd (SE)
(74) Representative: Swea IP Law AB

(57) **Abstract**

The present invention relates to a photovoltaic device comprising a porous conductive layer 4 comprising titanium particles 5 made of titanium or an alloy thereof, a conductor device in electrical contact with the porous conductive layer, and an adhering layer 12 arranged between the porous conductive layer 4 and the conductor device 10. The adhering layer 12 comprises an adhesive 14 and first conducting particles 16 distributed in the adhesive. At least a portion of the porous conductive layer 4 comprises second conducting particles 18 distributed among the titanium particles 5. The second conducting particles 18 are made of a conducting material that substantially resists formation of an electrically insulating oxide layer on its surface upon oxidation. The titanium particles 5 and the second conducting particles 18 are sintered together so that conducting junctions 20 are formed between the titanium particles 5 and the second conducting particles 18, and the first conducting particles 16 in the adhering layer 12 is in electrical contact with the second conducting particles 18.

## Description

### Technical field

The present invention relates to photovoltaic devices. More particular, the invention relates to photovoltaic devices comprising conductive layers and conductors attached to the conductive layers by means of adhering layers.

### Background

Photovoltaic devices provide conversion of light into electricity. A typical photovoltaic device comprises one or more solar cells. Solar cells are well-known devices for converting solar radiation to electrical energy. A solar cell has a front side that faces the sun during normal operation to collect solar radiation and a back side opposite the front side.

EP2625703B1 discloses a dye-sensitized solar cell comprising a counter electrode including a porous conductive layer. The porous conductive layer is in contact with an electrolyte including ions for transferring electrons from a counter electrode to a working electrode. The electrolyte penetrates through the porous conductive layer. The electrolyte is very corrosive. Thus, the material of the porous conductive layer must be resistant to corrosion.

WO2019/219538 discloses a photovoltaic device comprising a solar cell unit including a working electrode comprising a porous light-absorbing layer arranged at a top side of the solar cell unit, a porous upper conductive layer for extracting photo-generated electrons from the light-absorbing layer, wherein the light-absorbing layer is arranged on top of the upper conductive layer, a porous substrate made of an insulating material, wherein the porous upper conductive layer is formed on one side of the porous substrate, and a counter electrode including a porous lower conductive layer arranged at a bottom side of the solar cell unit, wherein the porous lower conductive layer is formed on an opposite side of the porous substrate. The photovoltaic device comprises a conducting medium for transferring charges between the counter electrode and the working electrode, such as a liquid electrolyte. The porous conductive layer may consist of titanium or an alloy thereof.

The photovoltaic device comprises an encapsulation encapsulating the solar cell unit to prevent the conducting medium from leaking from the solar cell. A problem with this photovoltaic device is how to conduct the generated electricity from the solar cell unit, which is encapsulated together with a corrosive electrolyte, to the outside of the photovoltaic device. This problem is solved by applying conductors, made of material resistant to corrosion, such as of titanium or an alloy thereof, to the porous conductive layers. The conductors are arranged between the solar cell unit and the encapsulation. The encapsulation is provided with penetrations for accessing the power produced by the photovoltaic device. For example, wires from the outside of the encapsulation are going through the penetrations and electrically connect to the conductors. The penetrations are tightly fit around the wiring passing through the encapsulation such that the conducting medium cannot pass through the penetrations.

However, how to attach the conductor to the porous conductive layer so that good electrical contact is achieved between the conductor and the porous conductive layer is a problem. The efficiency of the solar cell unit is decreased with bad contact between the porous conductive layer and the conductor. To achieve high efficiency of the solar cell it is important that the electrical resistance between the conductor and the porous conductive layer is low. A difficulty is the fact that the conductive layer is porous and have a rough surface with cavities, which makes it complicated to achieve good electrical and mechanical contact between the conductor and the porous conductive layer.

WO2021209221 suggests a solution to the above problem. WO2021209221 discloses a photovoltaic device comprising a solar cell unit including a working electrode comprising a light-absorbing layer, a first porous conductive layer comprising titanium for extracting photo-generated electrons from the light-absorbing layer, a counter electrode including a second porous conductive layer comprising titanium electrically insulated from the first porous conductive layer, a conducting medium for transferring charges between the counter electrode and the working electrode, a first conductor electrically connected to the first porous conductive layer, a second conductor electrically connected to the second porous conductive layer, a first adhering layer arranged between the first porous conductive layer and the first conductor, and a second adhering layer arranged between the second porous conductive layer and the second conductor. The first and second adhering layers comprises an adhesive and conducting particles distributed in the adhesive so that a conducting network is formed in the adhesive. The conductors are in electrical contact with the conductive layers through the network of conducting particles in the adhering layers. The adhesive makes it possible to adhere to the surface of the porous conductive layer. Further, applying the adhesive will not involve any mechanical forces on the porous conductive layer, and accordingly will not cause any damage of the surface of the porous conductive layer.

As mentioned in, for example WO2020/015882, an insulating oxide layer is formed on the surfaces of the conductive material of the first and second porous conductive layers during manufacturing of the solar cell unit. The insulating oxide layer provides an electrically insulating layer on the conductive material of the conductive layer, which at least partly prevents transfer of electrons between the conductive material and the conducting medium so that the efficiency of the solar cell unit increases.

Manufacturing of the solar cell comprises a sintering step during which the particles in the first porous conductive layer are sintered to each other and a following oxidation step during which the surfaces of the titanium particles are covered with an insulating oxide layer. The titanium particles are sintered to each other so that they are in electrical contact with each other. Since the oxidation step is performed after the sintering step, the contact surfaces between the titanium particles are not oxidized and thus there is electrical contact between the titanium particles.

However, a problem with the insulating oxide layers is that they reduce the electrical conductivity between the conductive layers and the adhering layers.

### Summary

The aim of the present invention is to improve the electrical conductivity between the conductive layer and the adhering layer of a photovoltaic device.

This aim is achieved by a photovoltaic device as defined in claim 1.

The photovoltaic device comprises a solar cell unit comprising:
- a light-absorbing layer,
- a first porous conductive layer comprising titanium particles made of titanium or an alloy thereof for extracting photo-generated electrons from the light-absorbing layer,
- a second porous conductive layer electrically insulated from the first porous conductive layer,
- a conducting medium for transferring charges between the second porous conductive layer and the light-absorbing layer,
- a first conductor device in electrical contact with the first porous conductive layer, and
- a first adhering layer arranged between the first porous conductive layer and the first conductor device, wherein the first adhering layer comprises an adhesive and first conducting particles distributed in the adhesive so that a conducting network is formed in the adhesive to provide electrical contact between the first porous conductive layer and the first conductor device.

At least a portion of the first porous conductive layer comprises second conducting particles distributed among the titanium particles, wherein the second conducting particles are made of a conducting material that substantially resists formation of an electrically insulating oxide layer on its surface upon oxidation. The titanium particles and the second conducting particles are sintered together so that conducting junctions are formed between the titanium particles and the second conducting particles, and the conducting network formed in the adhesive is in electrical contact with the second conducting particles.

The second conducting particles are made of a conducting material which substantially resists formation of an insulating oxide layer on its surfaces upon oxidation. The conducting material of the second conducting particles has the capacity to react with titanium and its alloys so that conducting junctions are formed between the titanium particles and the second conducting particles during the sintering step. The conducting junctions form electrically conducting bridges between the titanium particles and the second conducting particles. The conducting junctions improve the electrical contact between the titanium particles and the second conducting particles. The conducting junctions are formed between the titanium particles and the second conducting particles during the sintering step of the manufacturing of the solar cell unit. Since the second conducting particles substantially resist formation of oxide layers on their surfaces during the oxidation step of the manufacturing process, the second conducting particles are not covered with an electrically insulating oxide layer in the same way as the titanium particles. Thus, the first conducting particles of the adhering layer are in electrical contact with the second conducting particles in the porous conductive layer, and the second conducting particles are in electrical contact with the titanium particles via the conducting junctions. Accordingly, the conducting network in the adhering layer is in electrical contact with the titanium particles in the first porous conductive layer via the second conducting particles. Thus, the electrical conductivity between the porous conductive layer and the adhering layer is essentially improved.

With the feature "second conducting particles substantially resists formation of an insulating oxide layer on its surfaces upon oxidation" is meant that the thickness of the remaining insulating oxide layer on the surfaces of the second conducting particles is less than 40 nm after manufacturing of the solar cell unit. Preferably, there is no remaining insulating oxide layer on the surfaces of the second conducting particles after manufacturing of the solar cell unit.

The feature "at least a portion of the first porous conductive layer comprises second conducting particles distributed among the titanium particles" means that either the second conducting particles are distributed among the titanium particles in the entire first porous conductive layer, or that the second conducting particles are distributed among the titanium particles only in a portion of the first porous conductive layer. To achieve an improvement of the electrical conductivity between the first porous conductive layer and the first adhering layer, it is necessary that the second conducting particles are in electrical contact with the conducting network in the adhering layer. The conducting network in the adhering layer can be in direct or indirect electrical contact with the second conducting particles. For example, at least some of the second conducting particles are located at the interface between the first adhering layer and the first porous conductive layer. The first conducting particles are then in mechanical and electrical contact with the second conducting particles, and thereby in direct electrical contact with the second conducting particles. In this way, it is ensured that the first conducting particles in the first adhering layer make electrical contact with the second conducting particles in the first conducting layer. However, it is also possible that the conducting network in the adhering layer is in indirect electrical contact with the second conducting particles, for example, via another conducting layer.

With the feature "the titanium particles and the second conducting particles are sintered together so that conducting junctions are formed between the titanium particles and the second conducting particles" is meant that the titanium particles and the second conducting particles are in mechanical and electrical contact with each other and that there are conducting junctions between the titanium particles and the second conducting particles. The titanium particles and the second conducting particles have been attached to each other by means of sintering and the conducting junctions have been formed between the titanium particles and the second conducting particles during the sintering process.

According to an embodiment of the invention, the first porous conductive layer comprises between 0.001 wt% and 5 wt% of the second conducting particles, and preferably between 0.001 wt% and 3 wt of the second conducting particles, wherein wt% are weight percentages of the total weight of the first porous conductive layer.

According to an embodiment of the invention, the conducting material of the second conducting particles is selected from the group comprising or consisting of carbon, metal silicide, metal nitride, metal carbide, doped metal oxide, doped silicon, and combinations thereof. Those conducting materials have greater resistance to surface oxide formation than titanium and react with titanium during sintering to form conducting junctions between the titanium particles and the second conducting particles. For example, carbon can form conducting junctions of titanium carbide, metals silicide can form conducting junctions of titanium silicide, metal nitride can form conducting junctions of titanium nitride, and metal carbide can form conducting junctions of titanium carbide, doped metal oxide and doped silicon can form conducting junctions of doped titanium oxide. The material in the conducting junctions improves the conductivity between the titanium particles and the conducting material of the second conducting particles.

According to an embodiment of the invention, the conducting material of the second conducting particles is selected from the group comprising or consisting of carbon, metal silicide, metal nitride, metal carbide, and combinations thereof.

According to an embodiment of the invention, the conducting material of the second conducting particles is selected from the group comprising or consisting of carbon, doped metal oxide, doped silicon, and combinations thereof.

According to an embodiment of the invention, the conducting material of the second conducting particles is carbon and the conducting junctions between the titanium particles and the second conducting particles is titanium carbide. Titanium carbide improves the electrical conductivity between titanium and carbon, and thus improves the electrical conductivity between the titanium particles and the second conducting particles. Carbon is cheap and environmentally friendly. Further, titanium carbon has about the same electrical conductivity as titanium. Carbon forms carbon dioxide and/or carbon monoxide during oxidation, and accordingly it is not formed any insulating oxide layer on the surfaces of carbon particles during the oxidation phase of the manufacturing. It is to be understood that carbon can be any type of carbon, such as carbon black, graphene, carbon nanotubes, amorphous carbon, graphite, fullerene, nano graphite particles, or flakes.

Carbon is a catalytic material and may reduce the ability to produce current in the first porous conductive layer. Preferably, the first porous conductive layer comprises between 0.001 wt% and 5 wt% of carbon, more preferably between 0.001 wt% and 3 wt% of carbon, and most preferably between 0.001 wt% and 1 wt% of carbon, wherein wt% are weight percentages of the total weight of the portion of the first conductive layer including carbon. Such low amount of carbon does not affect the ability to produce current in the first porous conductive layer.

According to an embodiment of the invention, the second conducting particles are homogenously distributed among the titanium particles in the entire first porous conductive layer. This is advantageous from a manufacturing point of view since no extra manufacturing step is needed. The second conducting particles can simply be added to the ink including the titanium particles used for producing the first porous conductive layer.

If the second conducting particles are distributed in the entire first porous conductive layer, the first porous conductive layer preferably comprises between 0.001 wt% and 1 wt% of carbon, and most preferably the first porous conductive layer comprises between 0.001 wt% and 0.8 wt% of carbon, wherein wt% are weight percentages of the total weight of the first porous conductive layer. Such low amounts of carbon do not affect the ability to produce current in the first porous conductive layer, but still improves the electrical conductivity between the first porous conductive layer and the adhering layer.

According to an embodiment of the invention, the average size of the second conducting particles is larger than the average size of the first conducting particles. Preferably the average size of the second conducting particles is at least three times larger than the average size of the first conducting particles, and most preferably the average size of the second conducting particles is at least ten times larger than the average size of the first conducting particles. The smaller the first conducting particles are compared to the second conducting particles, the more of the first conducting particles can be in contact with each of the second conducting particles at the interface between the adhering layer and the first porous conductive layer. Thus, the interfacial surface area between the first and second conducting particles becomes larger and accordingly the electrical conductivity between the first and second conducting particles is increased. Accordingly, more contact points are achieved between the first and second conducting particles, which enhances the electrical conductivity between them.

According to an embodiment of the invention, the average size of the second conducting particles is between 1 µm - 5 µm, and the average size of the first conducting particles is between 1 nm - 500 nm. This will achieve sufficient contact points between the first and second conducting particles to enhance the electrical conductivity between them.

According to an embodiment of the invention, at least 80 wt% of the second conducting particles have a size between 1 nm and 10 µm, and preferably at least 80 wt% of the second conducting particles have a size between 0.5 µm and 5 µm, wherein wt% are weight percentages of the total weight of the second conducting particles. Preferably, the size of the second conducting particles is about the same as the size of the titanium particles to achieve suitable conducting junction between the particles during the sintering.

According to an embodiment of the invention, at least 80 wt% of the titanium particles have a size between 1 nm and 10 µm, and preferably at least 80 wt% of the titanium particles have a size between 0.5 µm and 5 µm, wherein wt% are weight percentages of the total weight of the titanium particles.

According to an embodiment of the invention, the average size of the titanium particles and the second conducting particles are larger than the average size of the first conducting particles, preferably the average size of the titanium particles and the second conducting particles are at least three times larger than the average size of the first conducting particles, and most preferably the average size of the titanium conducting particles and the second conducting particles are at least ten times larger than the average size of the first conducting particles. Since the first conducting particles are small compared to the titanium particles and the second conducting particles, the interfacial surface area between the first and second conducting particles is large. Furter, the first conducting particles can fit in irregularities and cavities on the surface of the porous conductive layer so that good electrical contact is achieved between the first conducting particles and the second conducting particle.

According to an embodiment of the invention, the solar cell unit comprises a porous insulating layer made of an insulating material, the light-absorbing layer is arranged on top of the first porous conductive layer, the first porous conductive layer is at least partly formed on an upper side of the porous insulating layer, the second porous conductive layer is formed on a lower side of the porous insulating layer, the light-absorbing layer is arranged at a top side of the solar cell unit, and the second porous conductive layer is arranged at a bottom side of the solar cell unit that is parallel to the top side of the solar cell unit.

According to an embodiment of the invention, the first conductor device is arranged below the porous insulating layer in the direction extending normal from the top side of the solar cell unit to the bottom side of the solar cell unit. The first conductor device is disposed on the bottom side of the solar cell unit. Thus, there will then be no visible wiring on the upper side of the photovoltaic device.

According to an embodiment of the invention, the first porous conductive layer comprises a first portion comprising the second conducting particles sintered to the titanium particles, and a second portion comprising the titanium particles sintered to each other without any second conducting particles. Thus, only a portion of the first porous conductive layer comprises the second conducting particles sintered to the titanium particles, and the remaining part of the first porous conductive layer does not have any second conducting particles. Preferably, the first portion comprising the second conducting particles is located at or close to the interface between the first porous conductive layer and the first adhering layer. If the material of the second conducting particles is catalytic, such as carbon, it is advantageous that only a portion of the first porous conductive layer comprises the second conducting particles, since the second conducting particles may reduce the ability to produce current in the first porous conductive layer.

According to an embodiment of the invention, the first portion of the first porous conductive layer is a single layer of second conducting particles and titanium particles disposed on the surface of the second portion of the first porous conductive layer. It is enough if there is a single layer of second conducting particles and titanium particles disposed on the surface of second portion of the first porous conductive layer to achieve a significant improvement of the electrical conductivity between the first porous conductive layer and the first adhering layer. Thus, the first portion including the second conducting particles can be made very thin.

According to an embodiment of the invention, the thickness of the first portion of the first porous conductive layer in a direction extending normal from a top side of the solar cell unit to a bottom side of the solar cell unit is between 0.5 µm and 20µm, and preferably between 0.5 µm and 10µm, and most preferably between 0.5 µm and 5µm. The thinner the first portion is, the less is the influence on the power production, if the material of the second conducting particles is catalytic.

According to an embodiment of the invention, the second portion of the first porous conductive layer is formed on the upper side of the porous insulating layer, and the first portion of the first porous conductive layer is formed on top of the second portion of the first porous conductive layer.

According to an embodiment of the invention, the first porous conductive layer comprises a third portion comprising titanium particles sintered to each other without any second conducting particles. The second portion of the first porous conductive layer is formed on the upper side of the porous insulating layer, and the third portion of the first porous conductive layer extends through the porous insulating layer from the upper side of the porous insulating layer to the lower side of the porous insulating layer. The first portion of the first porous conductive layer is disposed below the porous insulating layer in physical and electrical contact with said third portion of the first porous conductive layer, and the first adhering layer is arranged below the porous insulating layer and in physical and electrical contact with the first portion of the first porous conductive layer. The first conductor device is arranged on the bottom side of the solar cell unit. This makes it possible to locate the first conductor device on the bottom side of the solar cell unit, and there will be no visible wiring on the upper side of the photovoltaic device, which prevents the light from reaching the light-absorbing layer.

According to an embodiment of the invention, a part the porous insulating layer comprises one or more through holes extending in a direction normal from the top side of the solar cell unit to the bottom side of the solar cell unit, and the third portion of the first porous conductive layer extends through the one or more through holes.

According to an embodiment of the invention, the second porous conductive layer comprises titanium particles made of titanium or an alloy thereof and at least a portion of the second porous conductive layer comprises the second conducting particles made of a conducting material that substantially resists formation of an insulating oxide layer on its surface upon oxidation, and the titanium particles and the second conducting particles are sintered together so that conducting junctions are formed between the titanium particles and the second conducting particles. The solar cell unit further comprises:
- a second conductor device in electrical contact with the second porous conductive layer, and
- a second adhering layer arranged between the second porous conductive layer and the second conductor device, wherein the second adhering layer comprises the adhesive and the first conducting particles distributed in the adhesive so that a conducting network is formed in the adhesive, and the second porous conductive layer is in electrical contact with the conducting network formed in the second adhering layer. Thus, the electrical conductivity between the second porous conductive layer and the second adhering layer is improved in the same way as the electrical conductivity between the first porous conductive layer and the first adhering layer is improved as described earlier.

According to an embodiment of the invention, the second conductor is arranged below the second porous conductive layer in the direction extending normal from the top side of the solar cell unit to the bottom side of the solar cell unit. This makes it possible to locate the second conductor device on the bottom side of the solar cell unit.

According to an embodiment of the invention, the second porous conductive layer comprises at least 0.001 wt% of the second conducting particles, and preferably at least 0.01 wt% of the second conducting particles, wherein wt% are weight percentages of the total weight of the second porous conductive layer. Preferably, the second porous conductive layer comprises less than 40 wt% of the second conducting particles, wherein wt% are weight percentages of the total weight of the second porous conductive layer. Unlike the first porous conductive layer, it is advantageous if the second porous conductive layer comprises catalytic particles. The catalytic particles work as catalysts and facilitates the transfer of the electrons from titanium to the conducting medium in the pores of the second porous conductive layer. Thus, the amount of second conducting particles can be much higher in the second porous conductive layer than in the first porous conductive layer.

According to an embodiment of the invention, each of the first and second adhering layers comprises a non-porous conducting barrier arranged between the adhering layer and the conductor devices. If the conducting medium is an electrolyte including ions, the ions may travel through the adhering layers. The conducting barrier prevents the ions of the conducting medium to leak from the photovoltaic device.

### Brief description of the drawings

The invention will now be explained more closely by the description of different embodiments of the invention and with reference to the appended figures.
Fig. 1 shows an example of a photovoltaic device comprising porous conductive layers and adhering layers in a cross-sectional view.
Fig. 2 illustrates in an enlarged view the interface between the porous conductive layer and the adhering layer.
Fig. 3 shows the photovoltaic device of figure 1 in a view from above.
Fig. 4 shows another example of a photovoltaic device in a cross-sectional view.
Fig. 5 shows yet another example of a photovoltaic device in a cross-sectional view.
Fig. 6 shows the photovoltaic device of figure 5 in a view from above.
Fig. 7 shows examples of conducting barriers.

### Detailed description

Aspects of the present disclosure will be described more fully hereinafter with reference to the accompanying drawings. The photovoltaic device can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. As used herein, the singular forms "a", "an" and "the" are intended to include the plural forms as well, unless the context clearly indicates otherwise.

Unless otherwise defined, all terms used herein have the same meaning as commonly understood by one of ordinary skill in the art to which this disclosure belongs.

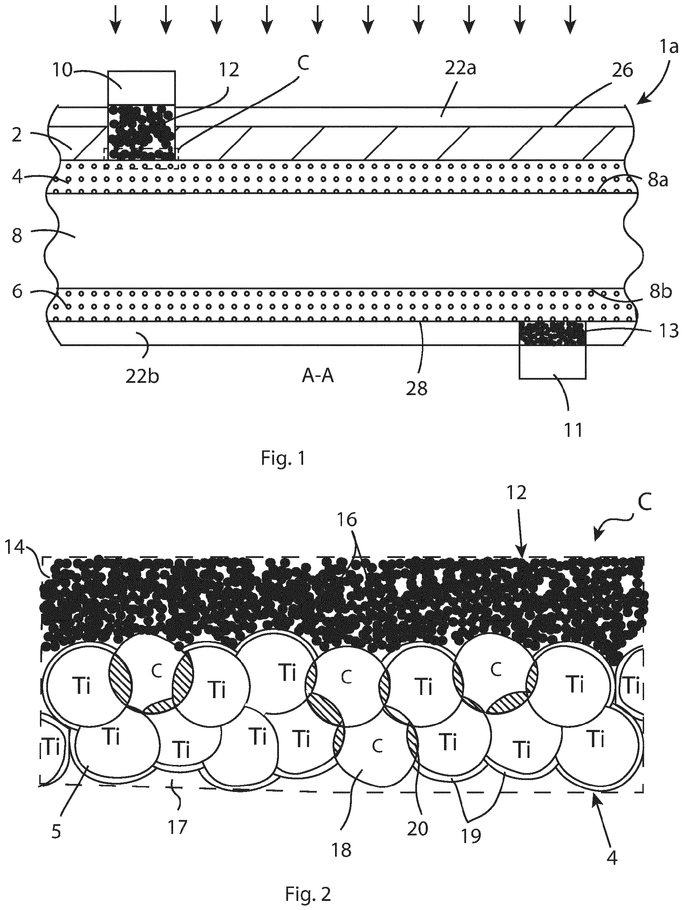

Figure 1 shows an example of a photovoltaic device 1a according to the invention. The photovoltaic device 1a comprises a solar cell unit comprising a light-absorbing layer 2, a first porous conductive layer 4 comprising titanium particles made of titanium or an alloy thereof for extracting photo-generated electrons from the light-absorbing layer 2, a second porous conductive layer 6 electrically insulated from the first porous conductive layer 4, and a porous insulating layer 8 disposed between the first and second porous conducting layers 4, 6. The porous insulating layer 8 serves the function of separating the first and second porous conducting layers 4, 6 physically and electrically in order to avoid direct electronic short circuit between them. The second porous conductive layer 6 comprises titanium particles made of titanium, or an alloy thereof sintered to each other so that they are in electrical contact with each other. The photovoltaic device 1a further comprises a conducting medium (not shown) for transferring charges between the second porous conductive layer 6 and the light-absorbing layer 2.

The light-absorbing layer 2 is arranged at a top side 26 of the solar cell unit so that the light-absorbing layer 2 faces incident light. In this example, the light-absorbing layer 2 is arranged on top of the first porous conductive layer 4, and the second porous conductive layer 6 is arranged at a bottom side 28 of the solar cell unit. The bottom side 28 is parallel to the top side 26 of the solar cell unit. In one aspect, the light-absorbing layer 2 is porous. The light absorbing layer may include a porous metal oxide with light absorbing material deposited on a top side. For example, the light absorbing layer 2 is a porous TiO₂ nanoparticle layer with adsorbed organic dye.

The conducting medium is disposed within pores of the light-absorbing layer 2, the first porous conductive layer 4, the porous insulating layer 8, and the second porous conductive layer 6. The conducting medium is, for example, an electrolyte infiltrated in the pores of the porous light absorbing layer 2, the first and second porous conductive layers 4,6, and the porous insulating layer 8. The electrolyte can be a liquid electrolyte, a gel or even solid. The conducting medium can, for example, be an ion-based electrolyte. For example, the electrolyte is any of an iodide/triiodide electrolyte, a copper complex-based electrolyte, or a cobalt complex-based electrolyte, or a combination thereof. Such electrolytes can be very corrosive. The titanium particles 5 are made of titanium or titanium alloy, which are corrosion resistant materials, so that the porous conductive layers 4, 6 can withstand contact with the corrosive electrolyte.

In this example, the first porous conductive layer 4 is formed on an upper side 8a of the porous insulating layer 8, and the second porous conductive layer 6 is formed on a lower side 8b of the porous insulating layer 8. In one example, the insulating layer 8 is a porous substrate made of an insulating material. The porous substrate is, for example, a sheet comprising woven microfibers extending through the entire solar cell unit. For example, the woven microfibers are made of glass fibres. The first conducting layer 4 is a layer of a porous conducting material deposited on one side of the porous substrate, and the second conducting layer 6 is a layer of a porous conducting material deposited on the other side of the porous substrate. The first and second conducting layers 4, 6 are, for example, printed on the porous substrate. Preferably, the titanium particles of the porous conductive layers 4, 6 are large enough to not penetrate the pores of the porous substrate.

The solar cell unit comprises a first conductor device 10 in electrical contact with the first porous conductive layer 4, and a second conductor device 11 in electrical contact with the second porous conductive layer 6. For example, the first and second conductor devices 10, 11 comprise a foil, a wire, conducting element, or a conducting bar,. The solar cell unit further comprises a first adhering layer 12 disposed between the first porous conductive layer 4 and the first conductor device 10, and a second adhering layer 13 disposed between the second porous conductive layer 6 and the second conductor device 11. The conductor devices 10, 11 are attached to the porous conductive layers 4,6 by means of the adhering layers 12,13. The first adhering layer 12 acts as a glue between the first conductor device 10 and the first porous conductive layer 4 and the second adhering layer 13 acts as a glue between the second conductor device 11 and the second porous conductive layer 6.

Figure 2 shows an enlargement of a part C of the interface between the first porous conductive layer 4 and the first adhering layer 12. In an aspect of the invention, figure 2 can also illustrate the interface between the second porous conductive layer 6 and the second adhering layer 11. The first and second adhering layers 12, 13 comprise an adhesive 14 and first conducting particles 16 distributed in the adhesive 14 so that a conducting network is formed in the adhesive 14 to provide electrical contact between the porous conductive layers 4, 6 and the conductor devices 10, 11, respectively. This means that the first conducting particles 16 are in electrical contact with each other so that they form an electrical path through the adhering layers 12, 13. Preferably, the same adhesive 14 and the same first conducting particles 16 are used in the first and second adhering layers 12, 13.

The first conducting particles 16 are preferably well dispersed in the adhesive 14. Preferably, but not limited to, the first conducting particles 16 are made of carbon. The first conducting particles 16 are, for example, made of crystalline graphite, amorphous carbon, carbon nanotubes, or graphene. Preferably, the adhesive is made of a chemically resistant plastic material. If the conducting medium is an electrolyte, the adhesive must be made of a material able to withstand the electrolyte, and which do not react with the ions in the electrolyte. For example, the adhesive is polyethylene, or polypropylene, or ionomer or mixtures thereof. Those materials can withstand electrolytes used in solar cells.

The first and second porous conductive layers 4, 6 comprises titanium particles 5 sintered to each other so that they are in electrical contact with each other. In this example, the first adhering layer 12 is in direct mechanical and electrical contact with the first porous conductive layer 4.

The titanium particles 5 are covered with an insulating oxide layer 19. The insulating oxide layer 19 prevents transfer of electrons between the titanium particles 5 and the conducting medium 17 disposed in the pores formed between the titanium particles 5 in the first and second porous conductive layers 4, 6. Accordingly, more electrons reach the light-absorbing layer 2 and by that the efficiency of the solar cell unit increases. However, the insulating oxide layers 19 on the titanium particles 5 also reduce the electrical conductivity between the titanium particles 5 and the first conducting particles 16 in the adhering layers. Since the oxidation step is performed after the sintering step during the manufacturing of the solar cell unit, the contact surfaces between the titanium particles 5 are not oxidized and thus there are electrical contact between the titanium particles 5.

The first porous conductive layer 4 comprises second conducting particles 18 distributed among the titanium particles 5 in at least a part of the first porous conductive layer 4. In figure 2, the titanium particles are marked with Ti and the conducting particles 18 are marked with C for an illustrative purpose. The second conducting particles 18 and the titanium particles 5 are in electrical contact with each other via conducting junctions 20 formed between the titanium particles 5 and the second conducting particles 18, as shown in figure 2. The conducting junctions 20 are formed during the sintering step of the manufacturing process of the solar cell unit. The conducting material of second conducting particles 18 reacts with the material of the titanium particles during the sintering step so that the conducting junctions 20 are formed between the titanium particles 5 and the second conducting particles 18. The conducting junctions 20 form electrically conducting bridges, which improve the electrical contact between the titanium particles 5 and the second conducting particles 18.

The second conducting particles 18 are made of a conducting material that substantially can resists formation of an electrically insulating oxide layer on its surfaces upon oxidation. Thus, the second conducting particles 18 are not covered with an electrically insulating oxide layer in the same way as the titanium particles during the oxidation step of the manufacturing process. The first conducting particles 16 of the first adhering layer 12 are in electrical contact with the second conducting particles 18 at the interface between the first porous conductive layer 4 and the first adhering layer 12, as shown in figure 2. Thus, the conducting network formed in the adhesive 14 is in electrical contact with the second conducting particles 18. The second conducting particles 18 are in electrical contact with the titanium particles 5 via the conducting junctions 20. Thus, the electrical conductivity between the first porous conductive layer 4 and the first adhering layer 12 is essentially improved.

The second conducting particles can have different shapes, for example, fibres, flakes, spherical shape, and irregular shapes. The second conducting particles can be solid or porous. For example, the conducting material of the second conducting particles 18 is selected from the group comprising or consisting of carbon, metal silicide, metal nitride, metal carbide, doped metal oxide, doped silicon, and combinations thereof. Those conducting materials have greater resistance to form an insulating oxide layer than titanium and can react with titanium during sintering of the particles and form conducting junctions between the titanium particles and the second conducting particles. Preferably, but not limited to, the second conducting particles 18 are made of carbon. Carbon form junctions of titanium carbide, metals silicide form conducting junctions of titanium silicide, metal nitride form conducting junctions of titanium nitride, and metal carbide form conducting junctions of titanium carbide, doped metal oxide and doped silicon can form conducting junctions of doped titanium oxide. The material in the conduction junctions improves the conductivity between the titanium and the material of the second conducting particles.

Suitably, the first porous conductive layer 4 comprises between 0.001 wt% and 5 wt% of the second conducting particles 18. Preferably, the first porous conductive layer 4 comprises between 0.001 wt% and 3 wt% of the second conducting particles, wherein wt% are weight percentages of the total weight of the first porous conductive layer. Such amounts of the second conducting particles improves the electrical conductivity between the first porous conductive layer and the adhering layer.

However, if the material in the second conducting particles 18 is catalytic, such as carbon, it may reduce the ability to produce current in the first porous conductive layer. In such case, the amount of second conducting particles should be as low as possible. For example, the first porous conductive layer 4 may comprise between 0.001 wt% and 1 wt% of the second conducting particles, or between 0.001 wt% and 0.8 wt% of the second conducting particles, wherein wt% are weight percentages of the total weight of the first porous conductive layer. Such low amounts of the second conducting particles does not affect the ability to produce current in the first porous conductive layer, but still improves the electrical conductivity between the first porous conductive layer and the adhering layer.

According to one aspect, the conducting material of the second conducting particles 18 is carbon and the conducting junctions 20 between the titanium particles 5 and the second conducting particles 18 comprise titanium carbide. Titanium carbide improves the electrical conductivity between titanium and carbon, and thus improves the electrical conductivity between the titanium particles and the second conducting particles. Carbon forms carbon dioxide and/or carbon monoxide during oxidation, and accordingly it is not formed any insulating oxide layer on the surfaces of carbon particles during the oxidation phase of the manufacturing. The carbon can be any type of carbon, such as carbon black, graphene, carbon nanotubes, amorphous carbon, graphite, fullerene, nano graphite particles or flakes.

Carbon is a catalytic material and may reduce the ability to produce current in the first porous conductive layer. Preferably, the first porous conductive layer 4 comprises between 0.001 wt% and 1 wt% of carbon, and most preferably the first porous conductive layer comprises between 0.001 wt% and 0.8 wt% of carbon to improve the electrical conductivity between the first porous conductive layer and the adhering layer, but not reduce the ability to produce current in the first porous conductive layer. Tests have shown that adding 0.2 % of carbon to the first porous conductive layer significantly increases the electrical conductivity between the first porous conductive layer and the adhering layer without affecting the ability to produce current.

In this example, the second porous conductive layer 6 also comprises titanium particles 5, and at least a portion of the second porous conductive layer 6 comprises second conducting particles 18 distributed among the titanium particles 5 in the same way as described for the first porous conductive layer 4. The titanium particles 5 and the second conducting particles 18 are sintered together so that conducting junctions 20 are formed between the titanium particles 5 and second conducting particles 18, as shown in figure 2.

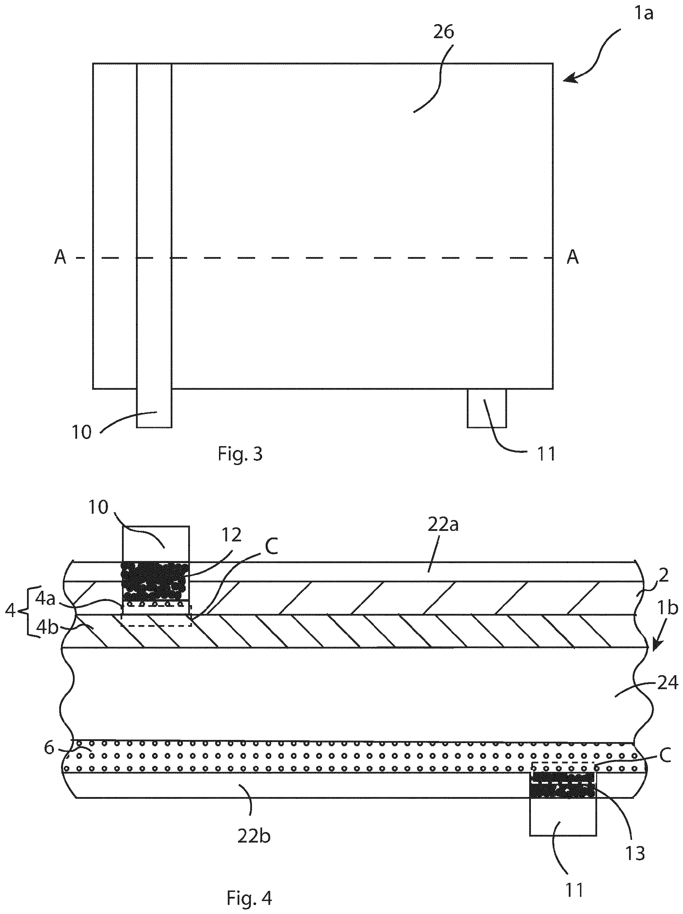

Figure 3 shows the photovoltaic device 1a of figure 1 in a view from above. Figure 1 is a cross-sectional view A-A through the photovoltaic device 1a shown in figure 3. In this example, the first conductor device 10 is arranged at the top side of the solar cell unit, and the second conductor device 11 is arranged at the bottom side of the solar cell unit.

The second conductor device 11 is arranged below the second porous conductive layer 6 in the direction extending normal from the top side of the solar cell unit to the bottom side of the solar cell unit. The second adhering layer 13 acts as a glue between the second conductor device 11 and the second porous conductive layer 6. The first conductive particles 16 in the conducting network formed in the adhesive 14 is in electrical contact with the second conducting particles 18 in the second porous conductive layer 6. The titanium particles 5 in the second porous conductive layer 6 are in electrical contact with first conducting particles 16 in the conducting network in the second adhering layer 13 via the second conducting particles 18. Thus, the electrical conductivity between the second porous conductive layer 6 and the second adhering layer 13 is improved in the same way as the electrical conductivity between the first porous conductive layer 4 and the first adhering layer 12 is improved as described earlier.

Unlike the first porous conductive layer 4, it is advantageous if the second porous conductive layer 6 comprises catalytic particles. The catalytic particles work as catalysts and facilitates the transfer of the electrons from the titanium particles 5 to the conducting medium 17 in the pores of the second porous conductive layer 6. Thus, the amount of the second conducting particles 18 can be higher in the second porous conductive layer 6 than in the first porous conductive layer 4. Preferably, the second conducting particles 18 are distributed in the entire second porous conductive layer. This is advantageous from a manufacturing point of view since no extra manufacturing step is needed. Preferably, the second porous conductive layer 6 comprises at least 0.001 wt% of the second conducting particles, and preferably at least 0.01 wt% of the second conducting particles, wherein wt% are weight percentages of the total weight of the second porous conductive layer 6. Preferably, the second porous conductive layer comprises less than 40 wt% of the second conducting particles, wherein wt% are weight percentages of the total weight of the second porous conductive layer.

Preferably, the average size of the second conducting particles 18 is larger than the average size of the first conducting particles 16. Preferably the average size of the second conducting particles 18 is at least three times larger than the average size of the first conducting particles 16. Most preferably, the average size of the second conducting particles 18 is at least ten times larger than the average size of the first conducting particles 16. For example, the average size of the second conducting particles 18 is about 100 times larger than the average size of the first conducting particles 16. The size of the particles can, for example, be determined using SEM. (Scanning Electron Microscopy). The smaller the first conducting particles 16 are compared to the second conducting particles 18, the more of the first conducting particles 16 can be in contact with each of the second conducting particles 18 at the interface between the adhering layer 12 and the first porous conductive layer 4. Accordingly, more contact points are achieved between the first and second conducting particles, which enhances the electrical conductivity between them.

The average size of the second conducting particles 18 is, for example, between 1 µm - 5 µm. The average size of the first conducting particles 16 is, for example, between 1 nm - 500 nm. This will achieve sufficient interfacial contact area between the first and second conducting particles to enhance the electrical conductivity between them.

The average size of the titanium particles and the second conducting particles are preferably larger than the average size of the first conducting particles. More preferably, the average size of the titanium particles and the second conducting particles are at least twice as large as the average size of the first conducting particles, and most preferably the average size of the titanium conducting particles and the second conducting particles are at least three times larger than the average size of the first conducting particles. Since the first conducting particles are small compared to the titanium particles and the second conducting particles, the interfacial surface area between the first and second conducting particles is large. Furter, the first conducting particles can fit in irregularities and cavities on the surface of the porous conductive layer so that good electrical contact is achieved between the first conducting particles and the second conducting particle.

Suitably, at least 80 wt% of the titanium particles 5 have a size between 1 nm and 10 µm, and preferably at least 80 wt% of the titanium particles 5 have a size between 0.5 µm and 5 µm, wherein wt% are weight percentages of the total weight of the titanium particles.

Preferably, the size of the second conducting particles 18 is about the same as the size of the titanium particles 5 to achieve suitable conducting junction 20 between the particles during the sintering. For example, at least 80 wt% of the second conducting particles have a size between 1 nm and 10 µm, and preferably at least 80 wt% of the second conducting particles have a size between 0.5 µm and 5 µm, wherein wt% are weight percentages of the total weight of the second conducting particles. For example, the size of the second conducting particles 18 is 2 µm, and the size of the first conducting particles 17 is 70 nm.

The photovoltaic device 1a comprises an encapsulation 22a-b encapsulating the solar cell unit and the conducting medium. The encapsulation may comprise an at least partly transparent top sheet 22a covering the top side 26 of the solar cell unit and a bottom sheet 22b covering the bottom side 28 of the solar cell unit The encapsulation prevents the conducting medium from leaking from the solar cell unit. At least a part of the first conductor device 10, for example, a wire or a conducting bar, extends on the outside of the encapsulation. The encapsulation comprises a first penetration hole (not shown) for connecting the first conductor device 10 to the first porous conductive layer 4 and a second penetration hole (not shown) for connecting the second conductor device 11 to the second porous conductive layer 6.

The second conducting particles 18 can be distributed among the titanium particles 5 in the entire first porous conductive layer 3. This is advantageous from a manufacturing point of view since no extra manufacturing step is needed. The second conducting particles can simply be added to the ink including the titanium particles used for producing the first porous conductive layer. However, if the material in the second conducting particles 18 is catalytic, such as carbon, the second conducting particles 18 reduce the ability to produce current in the first porous conductive layer. Thus, it can be preferred to only distribute the second conducting particles 18 among the titanium particles 5 in a portion of the first porous conductive layer 4. In such case, the second conducting particles 18 can be distributed among the titanium particles in a portion of the first porous conductive layer 4, which portion is located at the surface of the first porous conductive layer 4 and close to the first adhering layer 12 to achieve an improvement of the electrical conductivity between the first porous conductive layer and the first adhering layer.

Figure 4 shows an example of such a photovoltaic device 1b. The first porous conductive layer 4 of the photovoltaic device 1b comprises a first portion 4a including the second conducting particles 18 distributed among the titanium particles 5 and sintered to the titanium particles, and a second portion 4b including titanium particles 5 sintered to each other without any second conducting particles 18. In this example, the first portion 4a of the first porous conductive layer 4 is disposed on top of the second portion 4b of the first porous conductive layer 4, and the first adhering layer 12 is disposed on top of the first portion 4a of the first porous conductive layer. This embodiment is advantageous when the material of the second conducting particles 18 is catalytic. The first portion 4a is located between the second portion 4b of the first porous conductive layer 4 and the first adhering layer 12. The first portion 4a is disposed on the surface of the second portion 4b of the first porous conductive layer 4, which surface faces the first adhering layer 12.

It is enough if there is a single layer of second conducting particles 18 and titanium particles 5 disposed on the surface of second portion 4b of the first porous conductive layer 4 to achieve a significant improvement of the electrical conductivity between the first porous conductive layer 4 and the first adhering layer 12. Thus, the first portion 4a including the second conducting particles can be made very thin. The thickness of the first portion 4a in a direction extending normal from the top side 26 of the solar cell unit to the bottom side 28 of the solar cell unit is, for example, between 0.5 µm and 20µm, preferably between 0.5 µm and 10µm, and most preferably between 0.5 µm and 5µm. The thinner the first portion 4a including the second conducting particles is, the less is the influence on the power production when the material of the second conducting particles 18 is catalytic.

Preferably, the second conducting particles 18 are essentially evenly distributed among the titanium particles 5 in the first portion 4a of the first porous conductive layer 4. This will further improve the electrical conductivity between the first porous conductive layer 4 and the first adhering layer 12.

The second porous conductive layer 6 and the second adhering layer 12 can be arranged in the same way as described with reference to figure 1, or in the same way as the first conducting layer 4 described above with reference to figure 4.

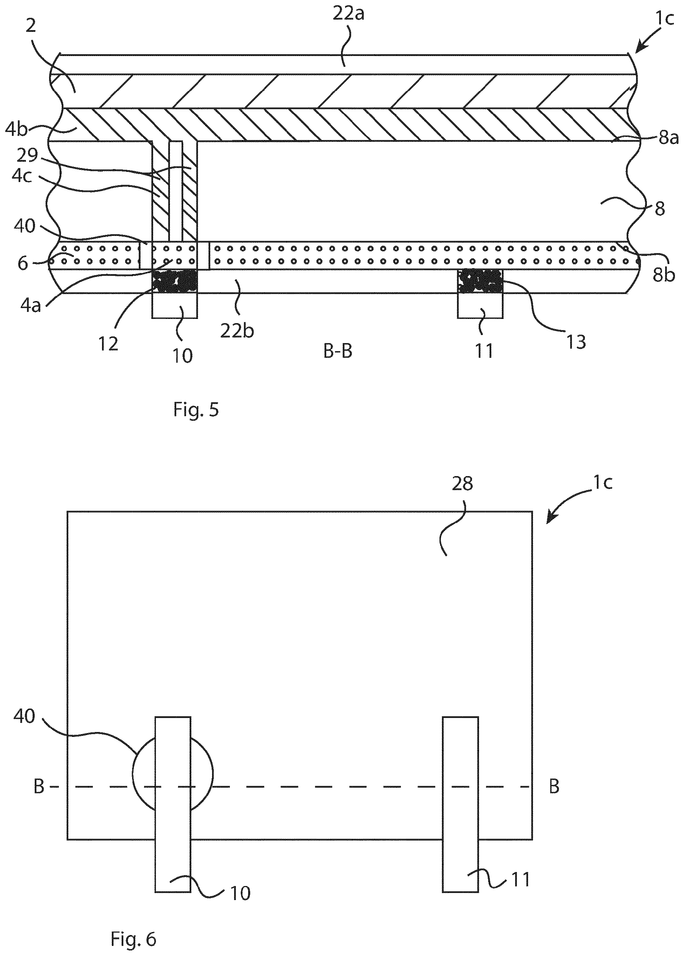

Figure 5 shows yet another example of a photovoltaic device 1c in a cross-sectional view. Figure 6 shows the photovoltaic device 1c in a view from above. In this example, the first conductor device 10 and the second conductor device 11 are arranged below the porous insulating layer 8 in the direction extending normal from the top side of the solar cell unit to the bottom side of the solar cell unit. Thus, the first conductor device 10 as well as and the second conductor device 11 are disposed at the bottom side of the solar cell unit. Thus, there will then be no visible wiring on the upper side of the photovoltaic device 1c. In this example, the first adhering layer 12 is disposed below the porous insulating layer 8 on the bottom side of the solar cell unit.

In this example, the first porous conductive layer 4 comprises a first portion 4a, which comprises the second conducting particles 18 distributed among the titanium particles 5, and a second portion 4b and a third portion 4c, which both includes titanium particles 5 sintered to each other and both are without any second conducting particles 18. The second portion 4b is in the form of a layer disposed on the upper side 8a of the porous insulating layer 8. The third portion 4c extends through the porous insulating layer 8 from the upper side 8a to the lower side 8b of the porous insulating layer 8. In this example, the first portion 4a of the first porous conductive layer 4 is disposed below the porous insulating layer 8, and below the third portion 4c of the first porous conductive layer, as shown in figure 5. The first adhering layer 12 is arranged below and in physical and electrical contact with the first portion 4a of the first porous conductive layer 4 including the second conducting particles 18. The first conducting particles 16 in the first adhering layer 12 is in electrical contact with the second conducting particles 18 in the first portion 4a of the first porous conductive layer, as shown in figure 2. The first adhering layer 12 is disposed between the first portion 4a of the first porous conductive layer and the first conductor device 10, and in electrical contact with both. The first conductor device 10 is in electrical contact with the conducting network formed in the adhesive. This makes it possible to locate the first conductor device 10 on the bottom side of the solar cell unit, and there will be no visible wiring on the upper side of the photovoltaic device, which prevents the light from reaching the light-absorbing layer.

In one aspect, the porous insulating layer 8 comprises one or more through holes 29 extending in from the upper side 8a of the porous insulating layer 8 to the lower side 8b of the porous insulating layer 8. The third portion 4c of the first porous conductive layer 4 extends through one or more through hole 29. Suitably, the porous insulating layer 8 is a porous substrate and a part of the porous substrate is provided with through holes 29 before the first porous conducting layer 4 is printed on the substrate. The ink including the titanium particles 5 penetrates through the one or more through holes 29 during the printing step of the manufacturing process.

To avoid short circuit between the first and second porous conductive layers 4, 6, the second porous conductive layer 6 ends at a distance from the first porous conductive layer 4 so that an insulating gap 40 is formed between the second porous conductive layer 6 and the first portion 4a of the first porous conductive layer 4, as shown in figure 5. The first portion 4a of the first porous conductive layer 4 can have different shapes. For example, the first portion 4a of the first porous conductive layer 4 has a circular shape and the insulating gap 40 is annular.

In one example, the second porous conductive layer 6 are made of the same material as the first portion 4a of the first porous conductive layer 4. Thus, the second porous conductive layer 6 as well as the first portion 4a of the first porous conductive layer 4 comprises the second conducting particles 18 distributed among the titanium particles 5. This simplified manufacturing of the solar cell unit since the second porous conductive layer 6 and the first portion 4a of the first porous conductive layer 4 can be manufactured in the same step. For example, the second portion 4b of the first porous conductive layer 4 can be manufactured by printing a first ink containing titanium particles, but without any second conducting particles, on a surface on the upper side 8a of the porous substrate. Some of the first ink will stay on the surface on the upper side 8a of the porous substrate and form the second portion 4b of the first porous conductive layer 4, and some of first ink will penetrate through the at least one through hole 29 in the porous substrate, and by that form the third portion 4c of the first porous conductive layer 4. The second porous conductive layer 6 and the first portion 4a of the first porous conductive layer 4 can be manufactured by printing with a second ink, including a mixture of titanium particles 5 and second conducting particles 18, on the lower side 8b of the porous substrate. Thereafter, the solar cell unit is exposed to a sintering step, in which the titanium particles 5 and second conducting particles 18 are sintered to each other and the conducting junctions 20 are formed between the titanium particles 5 and second conducting particles 18 in the second porous conductive layer 6 and the first portion 4a of the first porous conductive layer 4.

The sintering process is performed by heat treatment of the solar cell unit in a non-oxidizing environment to bond the titanium particles and the second conducting particles to each other, so that mechanical and electrical contact are achieved between them, and so that the conducting junctions 20 are formed between the titanium particles 5 and second conducting particles 18. Preferably, the solar cell unit, including the first and second conductive layers, is heat treated in vacuum with a temperature above 550°C during at least 30 minutes. For example, the solar cell unit is vacuum sintered at 650°C for an hour and then allowed to cool down to room temperature. The pressure during sintering is lower than 0.0001 mbar.

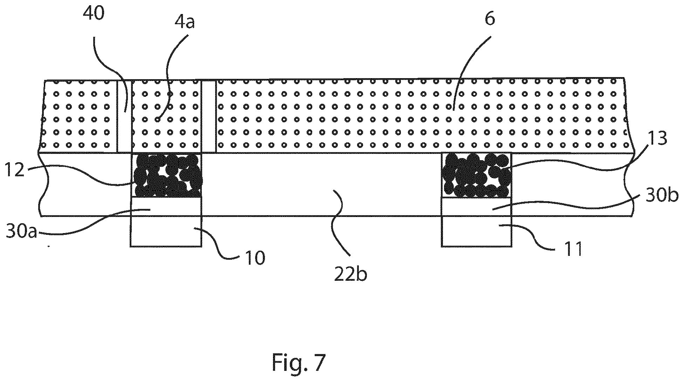

Figure 7 shows an example of a solar cell unit including conducting barriers 30, 30b. If the conducting medium is an electrolyte including ions, the ions may travel through the adhering layers 12, 13. As proposed in WO2021/209221, non-porous conducting barriers 30a and 30b can be arranged between the adhering layers 12, 13 and the first and second conductor devices 10, 11, respectively. For example, the non-porous conducting barriers 30a and 30b are attached to the first and second conductor devices 10, 11, by soldering. The non-porous conducting barriers 30a, 30b prevent the ions from traveling through the adhering layers 12, 13. The conducting barriers 30a, 30b act as barriers for the ions in the conducting medium and prevents the ions from penetrating to the outside of the photovoltaic device through the penetration holes. Since the conducting barriers are in contact with the conducting medium, they should preferably be made in a corrosion resistant material, for example, titanium. Suitably, the conducting barriers 30a-b are plate shaped. For example, the conducting barrier has a circular shape. However, other shapes are also possible, such as rectangular. The thickness of the conducting barrier 14 is preferably at least 10 nm.

The present invention is not limited to the embodiments disclosed but may be varied and modified within the scope of the following claims. For example, the solar cell unit may comprise additional layers, such as a catalytic layer disposed between the porous insulating layer and the second porous conductive layer. There may also exist other conductive material than those mentions in the description, which fulfils the aforementioned requirements, and is suitable for forming the 18 second conducting particles.

### Reference list

1a; 1b, 1c photovoltaic device
2 light-absorbing layer
4 first porous conductive layer
4a first portion of the first conductive layer including second conducting particles
4b second portion of the first conductive layer without second conducting particles
4c third portion of the first conductive layer without second conducting particles
5 titanium particles
6 second porous conductive layer
8 porous insulating layer
8a upper side of the porous insulating layer
8b lower side of the porous insulating layer
10 first conductor device
11 second conductor device
12 first adhering layer
13 second adhering layer
14 adhesive
16 first conducting particles
17 conducting medium
18 second conducting particles
19 insulating oxide layer
20 conducting junctions
22a top sheet of the encapsulation
22b bottom sheet of the encapsulation
26 top side of the solar cell unit
28 bottom side of the solar cell
29 through holes in the porous insulating layer
30a, 30b conducting barrier
40 gap

## Claims

1. A photovoltaic device (1a;1b;1c) including a solar cell unit comprising:
- a light-absorbing layer (2),
- a first porous conductive layer (4) comprising titanium particles (5) made of titanium or an alloy thereof for extracting photo-generated electrons from the light-absorbing layer (2),
- a second porous conductive layer (6) electrically insulated from the first porous conductive layer (4),
- a conducting medium for transferring charges between the second porous conductive layer (6) and the light-absorbing layer (2),
- a first conductor device (10) in electrical contact with the first porous conductive layer (4),
- a first adhering layer (12) arranged between the first porous conductive layer (4) and the first conductor device (10), wherein the first adhering layer (12) comprises an adhesive (14) and first conducting particles (16) distributed in the adhesive (18) so that a conducting network is formed in the adhesive to provide electrical contact between the first porous conductive layer (4) and the first conductor device (10),
**characterized in that** at least a portion of the first porous conductive layer (4) comprises second conducting particles (18) distributed among the titanium particles (5), wherein the second conducting particles (18) are made of a conducting material that substantially resists formation of an electrically insulating oxide layer on its surface upon oxidation, wherein the titanium particles (5) and the second conducting particles (18) are sintered together so that conducting junctions (20) are formed between the titanium particles (5) and the second conducting particles (18), and the conducting network formed in the adhesive (14) is in electrical contact with the second conducting particles (18).

2. The photovoltaic device according to claim 1, wherein the conducting material of the second conducting particles (18) is selected from the group comprising of carbon, metal silicide, metal nitride, metal carbide, doped metal oxide, doped silicon, and combinations thereof.

3. The photovoltaic device according to claim 1 or 2, wherein the conducting material of the second conducting particles (18) is carbon and said conducting junctions (20) between the titanium particles (5) and the second conducting particles (18) is titanium carbide.

4. The photovoltaic device according to claim 3, wherein said at least a portion of the first porous conductive layer (4) comprises between 0.001 wt% and 5 wt% of carbon, and preferably between 0.001 wt% and 3 wt% of carbon, wherein wt% are weight percentages of the total weight of said portion.

5. The photovoltaic device according to any one of the previous claims, wherein the average size of said second conducting particles (18) at least three times larger than the average size of the first conducting particles (16), and preferably the average size of said second conducting particles (18) is at least ten times larger than the average size of the first conducting particles (16).

6. The photovoltaic device according to any one of the previous claims, wherein the average size of said second conducting particles (18) is between 1 µm - 5 µm and the average size of said first conducting particles (16) is between 1 nm - 500 nm.

7. The photovoltaic device according to any one of the previous claims, wherein at least 80 wt% of said second conducting particles (18) have a size between 1 nm and 10 µm, and preferably at least 80 wt% of said second conducting particles (18) have a size between 0.5 µm and 5 µm, wherein wt% are weight percentages of the total weight of the second conducting particles (18).

8. The photovoltaic device according to any one of the previous claims, wherein the solar cell unit comprises a porous insulating layer (8) made of an insulating material, the light-absorbing layer (2) is arranged on top of the first porous conductive layer (4), the first porous conductive layer (4) is formed on an upper side (8a) of the porous insulating layer (8), the second porous conductive layer (6) is formed on a lower side (8b) of the porous insulating layer (8), the light-absorbing layer (2) is arranged at a top side (26) of the solar cell unit, and the second porous conductive layer (6) is arranged at a bottom side (28) of the solar cell unit that is parallel to the top side of the solar cell unit.

9. The photovoltaic device according to any one of the previous claims, wherein a first portion (4a) of the first porous conductive layer (4) comprises said second conducting particles (18) sintered to the titanium particles (5), and a second portion (4b) of the first porous conductive layer (4) comprises titanium particles (5) sintered to each other without any second conducting particles (18).

10. The photovoltaic device according to claim 9, wherein the thickness of said first portion (4a) in a direction extending normal from a top side (26) of the solar cell unit to a bottom side (28) of the solar cell unit is between 0.5 µm and 20µm, and preferably between 0.5 µm and 10µm, and most preferably between 0.5 µm and 5µm.

11. The photovoltaic device according to claim 9, wherein the first portion (4a) of the first porous conductive layer is a single layer of second conducting particles (18) and titanium particles (5) disposed on the surface of the second portion (4b) of the first porous conductive layer.

12. The photovoltaic device according to claim 8 and 9, wherein the first porous conductive layer (4) comprises a third portion (4c) comprising titanium particles (5) sintered to each other without any second conducting particles (18), the second portion (4b) of the first porous conductive layer (4) is formed on the upper side (8a) of the porous insulating layer (8), the third portion (4c) of the first porous conductive layer (4) extends through the porous insulating layer (8) from the upper side (8a) of the porous insulating layer (8) to the lower side (8b) of the porous insulating layer (8), said first portion (4a) of the first porous conductive layer is disposed below the porous insulating layer (8) in physical and electrical contact with said third portion (4c) of the first porous conductive layer, the first adhering layer (12) is arranged below the porous insulating layer (8) and in physical and electrical contact with said first portion (4a) of the first porous conductive layer, and the first conductor device (10) is arranged on the bottom side (28) of the solar cell unit.

13. The photovoltaic device according to claim 8 and 9, wherein the second portion (4b) of the first porous conductive layer is formed on the upper side (8a) of the porous insulating layer (8), and the first portion (4a) of the first porous conductive layer is formed on top of the second portion (4b) of the first porous conductive layer.

14. The photovoltaic device according to any one of the previous claims, wherein the second porous conductive layer (6) comprises titanium particles (5) made of titanium or an alloy thereof and at least a portion of the second porous conductive layer (6) comprises said second conducting particles (18), wherein the titanium particles (5) and the second conducting particles (18) are sintered together so that conducting junctions (20) are formed between the titanium particles (5) and the second conducting particles (18), and the solar cell unit (1) comprises:
- a second conductor device (11) in electrical contact with the second porous conductive layer (6), and
- a second adhering layer (13) arranged between the second porous conductive layer (6) and the second conductor device (11), wherein the second adhering layer (13) comprises said adhesive (14) and said first conducting particles (16) distributed in the adhesive (14) so that a conducting network is formed in the adhesive, and the conducting network in the second adhering layer (13) is in electrical contact with the second conducting particles (18) in the second porous conductive layer (6).

15. The photovoltaic device according to claim 14, wherein the second porous conductive layer (6) comprises at least 0.001 wt% of the second conducting particles (18), and preferably at least 0.01 wt% of the second conducting particles (18), wherein wt% are weight percentages of the total weight of the second porous conductive layer (6).
